# EUROPEAN PATENT APPLICATION

(11) **EP 4 825 680 A1**
(43) Date of publication of application: **21.10.2026**
(21) Application number: 24906018.7
(22) Date of filing: 27.11.2024
(51) Int. Cl.: B60W 30/06

(54) **PARKING METHOD AND APPARATUS, AND VEHICLE**

(30) Priority: 20.12.2023 CN 202311766616
(71) Applicant: Yinwang Intelligent Technologies Co., Ltd., Shenzhen, Guangdong 518110 (CN)
(72) Inventor: ZHANG, Xiaohua, Shenzhen, Guangdong 518110 (CN); QIN, Cai, Shenzhen, Guangdong 518110 (CN); CAO, Xiangmin, Shenzhen, Guangdong 518110 (CN); YU, Hao, Shenzhen, Guangdong 518110 (CN)
(74) Representative: Gill Jennings & Every LLP
(86) International application number: PCT/CN2024/134829
(87) International publication number: WO 2025/130533

(57) **Abstract**

A parking method and apparatus, and a vehicle are provided. The parking method includes: obtaining pose information, where the pose information includes pose information of a vehicle during a process in which a user drives the vehicle to park into a target parking space; and controlling the vehicle based on the pose information to automatically park into the target parking space. The method may be applied to intelligent vehicles or electric vehicles, and pose information of a vehicle during a process in which a user drives the vehicle to park into a target parking space is memorized, so that when the user wants to park the vehicle into the target parking space next time, the vehicle can be automatically controlled to park into the target parking space by using an automatic parking function together with the previously memorized pose information.

## Description

This application claims priority to Chinese Patent Application No. 202311766616.5, filed with the China National Intellectual Property Administration on December 20, 2023 and entitled "PARKING METHOD AND APPARATUS, AND VEHICLE", which is incorporated herein by reference in its entirety.

### TECHNICAL FIELD

This application relates to the field of intelligent driving, and more specifically, to a parking method and apparatus, and a vehicle.

### BACKGROUND

Automatic parking (auto parking, AP) refers to automatically parking a vehicle into a parking space, that is, an autonomous driving system can semi-automatically or fully automatically assist a user in parking the vehicle into the parking space. Automatic parking may include automatic parking assist (auto parking assist, APA), remote parking assist (remote parking assist, RPA), automatic valet parking (auto valet parking, AVP), and the like.

Currently, some companies have introduced parking technologies that require parking lot retrofitting. A perception sensor network (for example, 25 lidars per 3 square meters on average), a wireless communication network, a parking lot management server, and the like need to be deployed in the parking lot. This results in excessively high parking lot retrofitting costs, hindering widespread adoption. Moreover, in parking lots that have not been retrofitted, users still face difficulties in parking vehicles into parking spaces.

### SUMMARY

This application provides a parking method and apparatus, and a vehicle, to help to improve user experience of a user in a parking process.

According to a first aspect, a parking method is provided. The method includes: obtaining first pose information, where the first pose information includes pose information of a vehicle during a process in which a user drives the vehicle to park into a first target parking space; and controlling the vehicle based on the first pose information to automatically park into the first target parking space.

Based on the foregoing technical solution, pose information of a vehicle during a process in which a user drives the vehicle to park into a target parking space is memorized. When the user wants to park the vehicle into the target parking space next time, the vehicle can be automatically controlled through an automatic parking function and based on the previously memorized pose information to park into the target parking space, thereby helping to improve parking experience of the user.

For example, for some special parking spaces, the vehicle proactively memorizes the pose information when the user drives the vehicle to park into the target parking space, so that capability boundaries of automatic parking can be extended, parking efficiency can be improved, and a range of parking scenarios can be expanded. In addition, a process in which the user needs to manually park each time the user encounters a special parking space is avoided, thereby helping to improve parking experience of the user and also helping to improve intelligence of the vehicle.

Obtaining the first pose information may also be understood as obtaining a parking trajectory. The parking trajectory includes information about a plurality of trajectory points, and each of the plurality of trajectory points corresponds to one pose.

In some possible implementations, obtaining the first pose information includes: obtaining the first pose information when an input from the user to indicate to activate memory parking is obtained.

In some possible implementations, the first pose information includes a plurality of poses, for example, poses 1 to N, where N is an integer greater than 1. For another example, the pose 1 may be a vehicle pose when the user activates a memory parking function.

In some possible implementations, the automatic parking method may be applied to the foregoing APA.

In some possible implementations, before obtaining the first pose information, the method further includes: determining that the first target parking space into which the user drives the vehicle to park is a parking space that is not identified based on data collected by a perception system of the vehicle.

For example, the parking space that is not identified using the data collected by the perception system may include a curbside parking space, a parking space on a step, and a parking space without parking space lines. For example, the parking space that is not identified using the perception system may alternatively be a parking space that is in a complex surrounding environment or extremely narrow (or extremely small).

In some possible implementations, before obtaining the first pose information, the method further includes: obtaining information about the first target parking space and obtaining an instruction from the user to activate APA; and failing, based on the instruction, to control the vehicle to park into the first target parking space.

For example, the first target parking space is a narrow parking space or a parking space with a special obstacle (for example, a wall or a column) around. A parking space that can be identified using the data collected by the perception system and into which the vehicle fails to be controlled to park may also be referred to as an invalid parking space, or this type of parking space may also be understood as a parking space that can be identified using the data collected by the perception system but into which parking fails using a current automatic parking capability.

In some possible implementations, the first target parking space may alternatively be a parking space of a normal size. The vehicle may plan a first parking trajectory for parking into the first target parking space from a first position around the first target parking space. The first parking trajectory includes at least one of a first travel distance, a first quantity of adjustment maneuvers, and a first parking duration in a parking process. The vehicle may further obtain a second parking trajectory of the vehicle driven by the user to park into the first target parking space from a second position (for example, a distance between the second position and the first position is less than or equal to a preset distance). The second parking trajectory may include a second travel distance, a second quantity of adjustment maneuvers, and a second parking duration. Obtaining the first pose information includes: obtaining the first pose information when at least one of the following is met: the first travel distance is greater than the second travel distance, the first quantity of adjustment maneuvers is greater than the second quantity of adjustment maneuvers, and the first parking duration is greater than the second parking duration.

Based on the foregoing technical solution, the vehicle may compare a parking trajectory of the vehicle driven by the user to park into the target parking space with a parking trajectory planned by the vehicle. If it is determined that a parking distance is shorter, a parking duration is shorter, or a quantity of adjustment maneuvers is smaller when the user drives the vehicle to park into the target parking space, the pose information of the vehicle during the process in which the user drives the vehicle to park into the target parking space may be memorized. Subsequently, the vehicle may use the memorized pose information to control the vehicle to park into the target parking space. In this way, parking efficiency of the user can be higher. In addition, the vehicle learns driving habits of the user, so that a parking capability of the vehicle can be improved.

With reference to the first aspect, in some implementations of the first aspect, the first pose information includes information about a plurality of poses, and controlling the vehicle based on the first pose information to automatically park into the first target parking space includes: when a first vehicle pose does not match any one of the plurality of poses, controlling the vehicle to change from the first pose to a second pose, where the plurality of poses include the second pose; and controlling the vehicle based on a pose starting from the second pose of the plurality of poses to automatically park into the first target parking space.

Based on the foregoing technical solution, when a current vehicle pose does not match any one of the plurality of memorized poses, the vehicle may be first controlled to adjust the pose to a pose of the plurality of previously memorized poses, and then the vehicle is controlled based on the memorized pose to park into the target parking space. In this way, the entire process does not require active intervention of the user, thereby helping to avoid complex operations of the user during the process of parking into the target parking space, helping to improve parking experience of the user, and helping to improve intelligence of the vehicle.

With reference to the first aspect, in some implementations of the first aspect, the plurality of poses indicate a plurality of positions, and the position indicated by the second pose is a position of the plurality of positions that is closest to the position indicated by the first pose.

Based on the foregoing technical solution, a trajectory point closest to a current position of the vehicle may be determined from a previously memorized parking trajectory based on the current position, thereby controlling the vehicle to change to a pose corresponding to the trajectory point. In this way, a travel distance of the vehicle before the vehicle is parked in the target parking space can be reduced, thereby helping to reduce a parking duration in the entire parking process, and helping to improve parking experience of the user.

With reference to the first aspect, in some implementations of the first aspect, the method further includes: obtaining first environment information around the first target parking space; and when it is detected that second environment information around the vehicle matches the first environment information, controlling a prompt apparatus to prompt the user to activate automatic parking; and controlling the vehicle based on the first pose information to automatically park into the first target parking space includes: when a first input of the user is obtained, controlling the vehicle based on the first pose information to automatically park into the first target parking space, where the first input indicates to activate automatic parking.

Based on the foregoing technical solution, during the process in which the user drives the vehicle to park into the target parking space, the vehicle may construct environment information (or map information) around the first target parking space. In this way, when the vehicle arrives at a vicinity of the first target parking space subsequently, it may be determined, using the data collected by the perception system and the constructed environment information, that the vehicle has traveled around the first target parking space, thereby prompting the user to activate automatic parking.

With reference to the first aspect, in some implementations of the first aspect, obtaining the first environment information around the first target parking space includes: when it is detected that a speed of the vehicle is less than or equal to a preset speed, obtaining data collected by a perception system; and constructing the first environment information based on a position of the first target parking space and the data.

Based on the foregoing technical solution, when the speed of the vehicle is less than or equal to the preset speed, the data collected by the perception system may be obtained, and the first environment information may be constructed based on the position of the first target parking space and the data. In this way, the first environment information may be constructed with reference to the position of the first target parking space, and the first environment information constructed based on data that is far away from the first target parking space does not need to be used, thereby helping to avoid a waste of computing resources.

For example, the preset speed is 20 kph.

For example, the vehicle may construct the first environment information based on the data collected by the perception system within a preset distance before traveling to the first target parking space. For example, the preset distance may be 10 meters.

In some possible implementations, obtaining the first environment information around the first target parking space includes: when an instruction of the user is obtained, constructing the first environment information based on data collected by the perception system, where the instruction indicates to construct the environment information around the first target parking space.

With reference to the first aspect, in some implementations of the first aspect, obtaining the first pose information includes: obtaining the first pose information when the vehicle fails to identify the first target parking space or the vehicle fails to park into the first target parking space from a current position of the vehicle.

With reference to the first aspect, in some implementations of the first aspect, the first target parking space includes a curbside parking space.

According to a second aspect, a parking apparatus is provided. The apparatus includes: an obtaining unit, configured to obtain first pose information, where the first pose information includes pose information of a vehicle during a process in which a user drives the vehicle to park into a first target parking space; and a control unit, configured to control the vehicle based on the first pose information to automatically park into the first target parking space.

With reference to the second aspect, in some implementations of the second aspect, the first pose information includes information about a plurality of poses, and the control unit is configured to: when a first vehicle pose does not match any one of the plurality of poses, control the vehicle to change from the first pose to a second pose, where the plurality of poses include the second pose; and control the vehicle based on a pose starting from the second pose of the plurality of poses to automatically park into the first target parking space.

With reference to the second aspect, in some implementations of the second aspect, the plurality of poses indicate a plurality of positions, and the position indicated by the second pose is a position of the plurality of positions that is closest to the position indicated by the first pose.

With reference to the second aspect, in some implementations of the second aspect, the obtaining unit is further configured to obtain first environment information around the first target parking space; and the control unit is further configured to: when second environment information around the vehicle matches the first environment information, control a prompt apparatus to prompt the user to activate automatic parking, and when a first input of the user is obtained, control the vehicle based on the first pose information to automatically park into the first target parking space, where the first input indicates to activate automatic parking.

With reference to the second aspect, in some implementations of the second aspect, the obtaining unit is configured to: when it is detected that a speed of the vehicle is less than or equal to a preset speed, obtain data collected by a sensor outside a cockpit; and construct the first environment information based on a position of the first target parking space and the data.

With reference to the second aspect, in some implementations of the second aspect, the obtaining unit is configured to obtain the first pose information when the vehicle fails to identify the first target parking space or the vehicle fails to plan a parking trajectory from a current position of the vehicle to the first target parking space.

With reference to the second aspect, in some implementations of the second aspect, the first target parking space includes a curbside parking space.

According to a third aspect, a control apparatus is provided. The apparatus includes a processing unit and a storage unit. The storage unit is configured to store instructions. The processing unit executes the instructions stored in the storage unit, to enable the apparatus to perform any possible control method in the first aspect.

According to a fourth aspect, a control system is provided. The control system includes a perception system and a computing platform. The computing platform includes any possible control apparatus in the second aspect or the third aspect.

According to a fifth aspect, this application provides a vehicle. The vehicle includes any possible control apparatus in the second aspect or the third aspect, or includes the control system in the fourth aspect.

According to a sixth aspect, this application provides a computer program product. The computer program product includes computer program code. When the computer program code is run on a computer, the computer is enabled to perform any possible method in the first aspect.

It should be noted that all or a part of the computer program code may be stored in a first storage medium. The first storage medium may be packaged together with a processor, or may be packaged separately from a processor. This is not specifically limited in embodiments of this application.

According to a seventh aspect, this application provides a computer-readable medium. The computer-readable medium stores program code. When the computer program code is run on a computer, the computer is enabled to perform any possible method in the first aspect.

According to an eighth aspect, this application provides a chip. The chip includes a circuit. The circuit is configured to perform any possible method in the first aspect.

### BRIEF DESCRIPTION OF DRAWINGS

FIG. 1 is a functional block diagram of a vehicle according to an embodiment of this application;
FIG. 2 is a schematic flowchart of a parking method according to an embodiment of this application;
FIG. 3 is a diagram of an application scenario according to an embodiment of this application;
FIG. 4A and FIG. 4B are other diagrams of an application scenario according to an embodiment of this application;
FIG. 5A and FIG. 5B are another schematic flowchart of a parking method according to an embodiment of this application;
FIG. 6 is a diagram of an interaction method when a vehicle parks into a target parking space for the first time according to an embodiment of this application;
FIG. 7 is a diagram of an interaction method when the vehicle travels to a vicinity of the target parking space again according to an embodiment of this application;
FIG. 8 shows an HMI according to an embodiment of this application;
FIG. 9 is a schematic flowchart of a parking method according to an embodiment of this application;
FIG. 10 shows another HMI according to an embodiment of this application; and
FIG. 11 is a block diagram of a parking apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

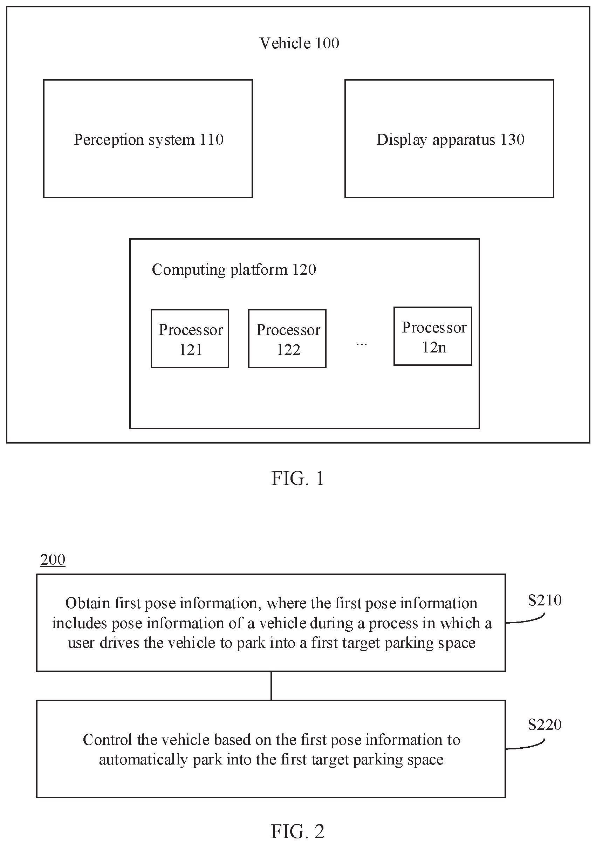

FIG. 1 is a functional block diagram of a vehicle 100 according to an embodiment of this application. The vehicle 100 may include a perception system 110, a computing platform 120, and a display apparatus 130. The perception system 110 may include one or more sensors that perceive information about a surrounding environment of the vehicle 100. For example, the perception system 110 may include a positioning system. The positioning system may be a global positioning system (global positioning system, GPS), a BeiDou system, or another positioning system. For another example, the perception system 110 may include one or more of an inertial measurement unit (inertial measurement unit, IMU), an acceleration sensor, a lidar, a millimeter-wave radar, an ultrasonic radar, and a camera apparatus. For example, the acceleration sensor may include a sensor for detecting an acceleration signal of an air suspension system, or may include a sensor for an acceleration signal of ESC.

Some or all of functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration file to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

The display apparatus 130 in a cabin is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cabin, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that there may be another type of HUD systems with evolution of technologies. This is not limited in this application.

The foregoing display apparatus 130 is described by using the in-vehicle display and the projection display as an example. Embodiments of this application are not limited thereto. For example, the display apparatus 130 may alternatively be a light display or a projection screen.

The vehicle 100 may include an advanced driver assistance system (advanced driver assistance system, ADAS). The ADAS obtains information from around a vehicle using a perception system 110 on the vehicle, and analyzes and processes the obtained information, to implement functions such as obstacle perception, object recognition, vehicle positioning, path planning, and driver monitoring/reminder, thereby improving driving safety, automation, and comfort of the vehicle. For example, the ADAS may be located on the foregoing computing platform.

In terms of logical functions, the ADAS system generally includes three main functional modules: a perception system 110, a decision-making module, and an execution module. The perception system 110 perceives a surrounding environment of a vehicle body using a sensor, and inputs corresponding real-time data into the decision-making module. The decision-making module makes a corresponding decision using a computing apparatus and an algorithm based on information obtained by the perception module. After receiving a decision signal from the decision-making module, the execution module performs a corresponding action, for example, driving, lane changing, steering, braking, or warning.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, the level L1 indicates driving assistance, the level L2 indicates partial automation, the level L3 indicates conditional automation, the level L4 indicates high automation, and the level L5 indicates full automation. Tasks of monitoring and responding to road conditions at the L1 to L3 levels are jointly completed by a driver and a system, and the driver needs to take over a dynamic driving task. The L4 and L5 levels may enable the driver to be completely transformed into a passenger. Currently, functions that can be implemented by the ADAS mainly include but are not limited to: adaptive cruise, automatic emergency braking, automatic parking, blind spot monitoring, traffic warning/braking at a crossroad ahead, traffic warning/braking at a crossroad behind, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, automatic parking may include APA, RPA, AVP, and the like. For APA, the driver does not need to control a steering wheel, but still needs to control a throttle and a brake on the vehicle. For RPA, the driver may remotely park the vehicle outside the vehicle by using a terminal (for example, a mobile phone). For AVP, the vehicle may complete parking without the driver. From a perspective of corresponding autonomous driving levels, APA is roughly at level L1, RPA is roughly between levels L2 and L3, and AVP is roughly at level L4.

FIG. 2 is a schematic flowchart of a parking method 200 according to an embodiment of this application. The method 200 may be performed by the foregoing vehicle 100, or the method 200 may be performed by the foregoing computing platform 120, or the method 200 may be performed by a system including the computing platform 120 and the perception system 110, or the method 200 may be performed by a system-on-a-chip (system-on-a-chip, SoC) on the computing platform 120, or the method 200 may be performed by a processor, a chip, or a circuit on the computing platform 120. The method 200 includes the following steps.

S210: Obtain first pose information, where the first pose information includes pose information of a vehicle during a process in which a user drives the vehicle to park into a first target parking space.

In an embodiment, before obtaining the first pose information, the method further includes: determining that the first target parking space is a parking space that is not identified based on data collected by a perception system of the vehicle.

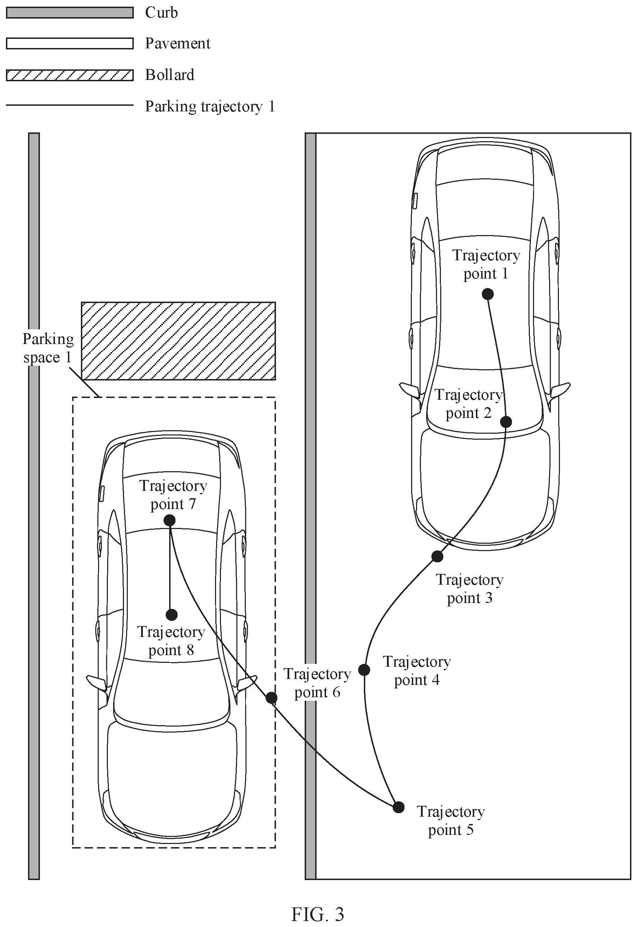

For example, FIG. 3 is a diagram of an application scenario according to an embodiment of this application.

The vehicle does not identify a curbside parking space 1 (in practice, the parking space 1 does not include parking space lines) using a sensor (for example, a camera or a lidar) outside a cockpit. When it is detected that the user drives the vehicle to park into the curbside parking space 1, the vehicle may proactively memorize pose information during the process in which the user drives the vehicle to park into the parking space 1. As shown in FIG. 3, the pose information during the process in which the user drives the vehicle to park into the parking space 1 includes information about a parking trajectory 1, and the parking trajectory 1 includes a trajectory point 1 to a trajectory point 8. Each trajectory point may correspond to one vehicle pose. Each vehicle pose may correspond to position coordinates (x, y, z) and orientation information (yaw, pitch, roll). The position coordinates may be coordinates in a world coordinate system, where yaw represents a yaw angle, pitch represents a pitch angle, and roll represents a roll angle.

In FIG. 3, a curbside parking space is used as an example for description. Parking spaces that are not identified based on the data collected by the perception system of the vehicle may also include a parking space on a step, a parking space without parking space lines, and the like.

In an embodiment, before obtaining the first pose information, the method 200 further includes: obtaining information about the first target parking space, and obtaining an instruction from the user to activate APA; and failing, based on the instruction, to control the vehicle to park into the first target parking space. For example, the first target parking space is a narrow parking space or a parking space with a special obstacle (for example, a wall or a column) around.

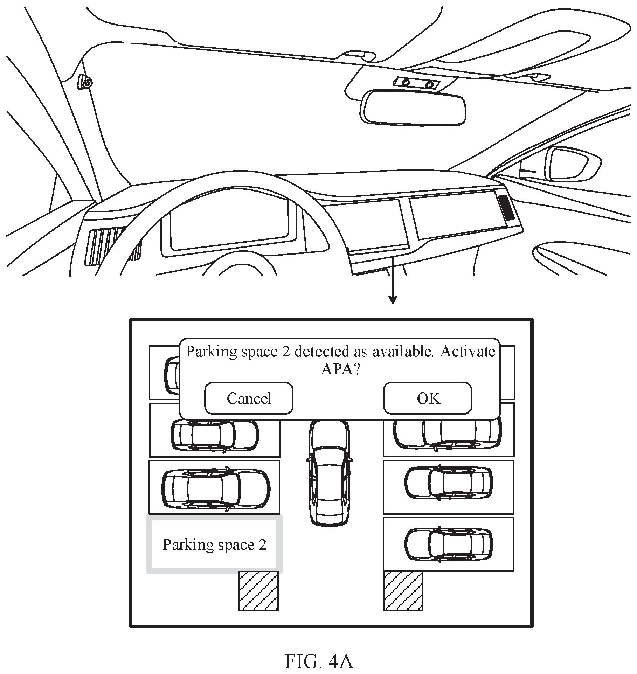

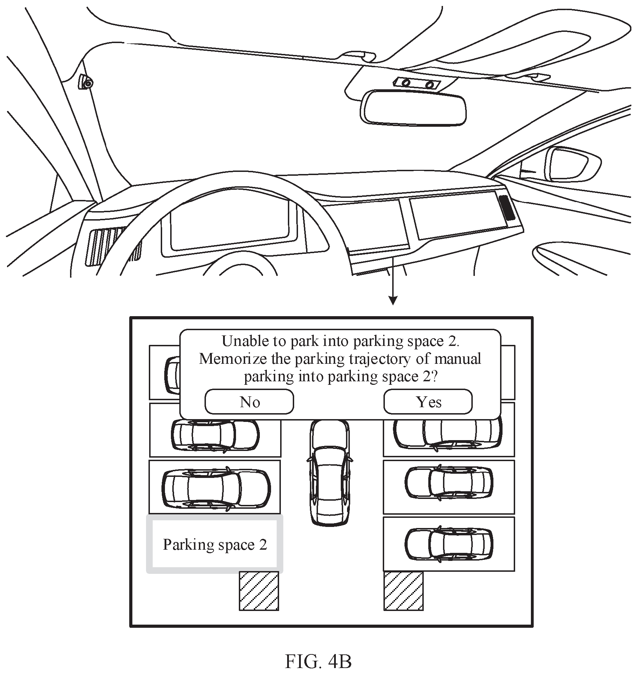

For example, FIG. 4A and FIG. 4B are other diagrams of an application scenario according to an embodiment of this application.

As shown in FIG. 4A, the vehicle identifies a parking space 2 and detects that the user selects the parking space 2 as a target parking space. The vehicle may prompt the user with "Parking space 2 detected as available. Activate APA?" via a display. When an input from the user to activate APA is detected, the vehicle may start to automatically park into the parking space 2.

As shown in FIG. 4B, when the vehicle fails to automatically park into the parking space 2, the vehicle may prompt the user with "Unable to park into parking space 2. Memorize the parking trajectory of manual parking into parking space 2?"

The vehicle failing to park into the parking space 2 may be understood as that the vehicle cannot plan a parking trajectory from a current position to the parking space 2, or the vehicle can plan a parking trajectory from a current position to the parking space 2 and there is a high risk of collision with a surrounding obstacle (for example, a column or a vehicle in another parking space) during parking into the parking space 2 along the parking trajectory. In this case, the vehicle may determine that parking into the parking space 2 fails.

In an embodiment, while indicating that automatic parking into the parking space 2 fails, the vehicle may further prompt the user whether to memorize a parking trajectory of the vehicle driven by the user to park into the parking space 2. When obtaining an input from the user to indicate to memorize the parking trajectory of the vehicle driven by the user to park into the parking space 2, the vehicle may memorize the parking trajectory of the vehicle driven by the user to park into the parking space 2. In this way, when the vehicle subsequently travels to a vicinity of the parking space 2, the vehicle can be controlled, using APA and the previously memorized parking trajectory, to automatically park into the parking space 2.

The parking trajectory memorized by the vehicle may include pose information during the process in which the user drives the vehicle to park into the parking space 2. For example, the parking trajectory includes a plurality of trajectory points, and each trajectory point may correspond to one pose.

In an embodiment, the first target parking space may alternatively be a parking space of a normal size. The vehicle may plan a first parking trajectory for parking into the first target parking space from a first position around the first target parking space. The first parking trajectory includes at least one of a first travel distance, a first quantity of adjustment maneuvers, and a first parking duration in the parking process. The vehicle may further obtain a second parking trajectory of the vehicle driven by the user to park into the first target parking space from a second position (for example, a distance between the second position and the first position is less than or equal to a preset distance). The second parking trajectory may include a second travel distance, a second quantity of adjustment maneuvers, and a second parking duration. Obtaining the first pose information includes: obtaining the first pose information when at least one of the following is met: the first travel distance is greater than the second travel distance, the first quantity of adjustment maneuvers is greater than the second quantity of adjustment maneuvers, and the first parking duration is greater than the second parking duration.

For example, at a moment T₁, the vehicle may plan a parking trajectory 1 for parking into a parking space 3 from a position 1 around the parking space 3. The parking trajectory 1 includes information about a parking distance (8 meters), a quantity of adjustment maneuvers (2), and a parking duration (for example, 50 seconds). At a moment T₂ after the moment T₁, the vehicle obtains a parking trajectory 2 of the user driving the vehicle to park into the parking space 3 from a position 2 around the parking space 3 (a distance between the position 2 and the position 1 is less than or equal to a preset distance (for example, 0.5 meter)). The vehicle may determine, based on the parking trajectory 1 and the parking trajectory 2, whether to replace the parking trajectory 1 planned by the vehicle with the parking trajectory 2 of the user driving the vehicle to park into the parking space 3.

For example, if a parking distance corresponding to the parking trajectory 2 is 6 meters, the vehicle may use the parking trajectory 2 as a parking trajectory for the vehicle to automatically park into the parking space 3.

For another example, if a quantity of adjustment maneuvers corresponding to the parking trajectory 2 is 1, the vehicle may use the parking trajectory 2 as a parking trajectory for the vehicle to automatically park into the parking space 3.

For another example, if a parking duration corresponding to the parking trajectory 2 is 30 seconds, the vehicle may use the parking trajectory 2 as a parking trajectory for the vehicle to automatically park into the parking space 3.

For example, when the vehicle travels to a vicinity of the parking space 3 and it is detected that the user activates APA at a moment T₃, the vehicle may be controlled to park into the parking space 3 based on the parking trajectory 2.

In this case, the foregoing adjustment maneuvers may be associated with a quantity of gear shifts during a process of parking the vehicle into the target parking space. For example, the user drives the vehicle to park into the parking space 3. If the user can directly park the vehicle into the parking space 3 in reverse gear (R gear), it indicates that the user can complete parking with zero adjustment maneuvers. If the user cannot directly park the vehicle into the parking space 3 after engaging R gear and further needs to shift from R gear to drive gear (D gear), drive the vehicle for a distance, and then shift from D gear to R gear to park the vehicle into the parking space 3, it indicates that the user completes parking with one adjustment maneuver. By analogy, a larger quantity of shifts between D gear and R gear by the user may indicate a larger quantity of adjustment maneuvers by the user.

In this embodiment of this application, the vehicle may compare a parking trajectory of the vehicle driven by the user to park into a target parking space with a parking trajectory planned by the vehicle. If it is determined that a parking distance is shorter, a parking duration is shorter, or a quantity of adjustment maneuvers is smaller when the user drives the vehicle to park into the target parking space, pose information of the vehicle during the process in which the user drives the vehicle to park into the target parking space may be memorized. Subsequently, the vehicle may be controlled to park into the target parking space based on the memorized pose information. As a result, parking efficiency of the user can be higher. In addition, the vehicle learns driving habits of the user, so that a parking capability of the vehicle can be improved and intelligence of the vehicle can also be improved.

S220: Control the vehicle based on the first pose information to automatically park into the first target parking space.

In an embodiment, the first pose information includes information about a plurality of poses, and controlling the vehicle based on the first pose information to automatically park into the first target parking space includes: when a first vehicle pose does not match any one of the plurality of poses, controlling the vehicle to change from the first pose to a second pose, where the plurality of poses include the second pose; and controlling the vehicle based on a pose starting from the second pose of the plurality of poses to automatically park into the first target parking space.

In an embodiment, when the first vehicle pose does not match any one of the plurality of poses, the vehicle may also prompt to adjust the vehicle pose to the second pose.

When a vehicle pose during parking does not match any one of the plurality of memorized poses, the vehicle may be first controlled to adjust the pose to a pose of the plurality of previously memorized poses, and the vehicle is controlled based on the memorized pose to park into the target parking space. The entire process does not require active intervention of the user, thereby helping to avoid complex operations of the user during the process of parking into the target parking space, helping to improve parking experience of the user, and helping to improve intelligence of the vehicle.

In an embodiment, the plurality of poses indicate a plurality of positions, and the position indicated by the second pose is a position of the plurality of positions that is closest to the position indicated by the first pose. In this way, a trajectory point closest to the current position of the vehicle is determined from the parking trajectory based on the current position, thereby controlling the vehicle to change to a pose corresponding to the trajectory point. In this way, a travel distance of the vehicle before the vehicle is parked in the target parking space can be minimized, thereby helping to reduce a parking duration in the entire parking process, and helping to improve parking experience of the user.

In an embodiment, the method 200 further includes: obtaining first environment information around the first target parking space; and when it is detected that second environment information around the vehicle matches the first environment information, controlling a prompt apparatus to prompt the user to activate automatic parking; and controlling the vehicle based on the first pose information to automatically park into the first target parking space includes: when a first input of the user is obtained, controlling the vehicle based on the first pose information to automatically park into the first target parking space, where the first input indicates to activate automatic parking.

The first environment information may also be understood as map information around the first target parking space. The map information may include information about a feature object around the first target parking space, for example, one or more of a speed bump, a column, a wall, a curb, a parking space number (for example, B1-C009) of the first target parking space, parking space information (for example, Zone B1-C) on a column, an electricity meter box, a fire hydrant, a light pole, a traffic sign, a ground marking, a road edge line, and a ditch around the first target parking space.

In an embodiment, detecting that the second environment information around the vehicle matches the first environment information includes: detecting that environmental features around the vehicle are at least partially the same as environmental features in the first environment information. For example, the first environment information includes parking space information (for example, Zone B1-C) on a column. When the vehicle detects, using a camera outside the cockpit, that the parking space information on the column is the same as the parking space information in the first environment information, the display may be controlled to indicate that the vehicle is around the target parking space and prompt the user to activate automatic parking.

In an embodiment, obtaining the first environment information around the first target parking space includes: when it is detected that a speed of the vehicle is less than or equal to a preset speed, obtaining data collected by a perception system; and constructing the first environment information based on a position of the first target parking space and the data.

For example, the preset speed is 20 kph.

For example, the vehicle may construct the first environment information based on the data collected by the perception system within a preset distance before traveling to the first target parking space. For example, the preset distance may be 10 meters.

In an embodiment, obtaining the first environment information around the first target parking space includes: when an instruction of the user is obtained, constructing the first environment information based on data collected by the perception system, where the instruction indicates to construct environment information around the first target parking space.

In an embodiment, the method includes: obtaining the first pose information when the vehicle fails to identify the first target parking space or the vehicle fails to park into the first target parking space from a current position of the vehicle.

In an embodiment, the first target parking space includes a curbside parking space.

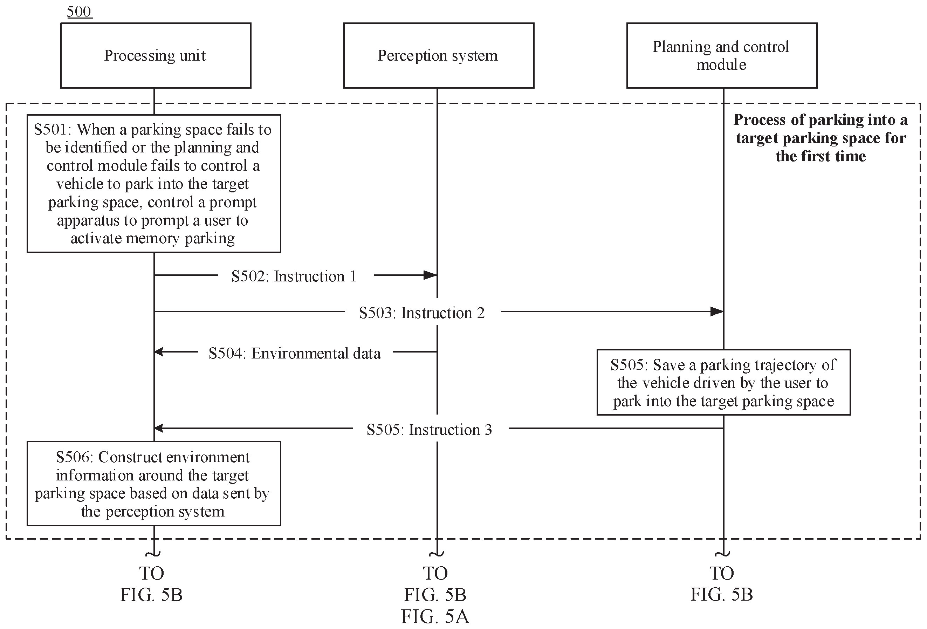

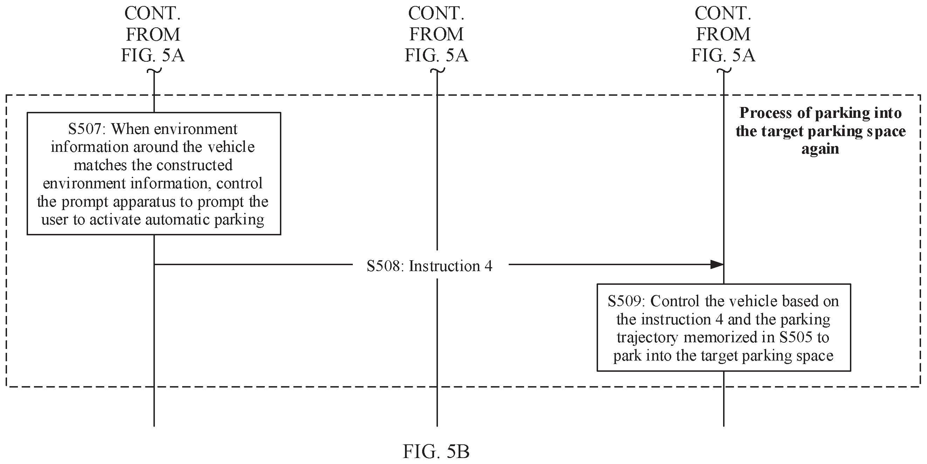

FIG. 5A and FIG. 5B are a schematic flowchart of a parking method 500 according to an embodiment of this application. The method 500 includes the following steps.

S501: When a target parking space fails to be identified based on data collected by a perception system, or when a target parking space is identified based on data collected by the perception system and a planning and control module fails to control a vehicle to park into the target parking space, a processing unit controls a prompt apparatus to prompt a user to activate memory parking.

The processing unit may be located in the foregoing computing platform 120.

For example, the prompt apparatus may be a display or a sound-making apparatus (for example, a speaker).

For example, when the processing unit fails to identify a target parking space based on data collected by the perception system, the processing unit may control the display to display prompt information "No target parking space detected around the vehicle. Activate memory parking? The vehicle will memorize a parking trajectory as you drive the vehicle to park into a target parking space during memory parking."

For example, when the processing unit identifies a target parking space based on data collected by the perception system and the planning and control module fails to control the vehicle to park into the target parking space, the processing unit may control the display to display prompt information "Unable to park into the target parking space. Activate memory parking? The vehicle will memorize a parking trajectory as you drive the vehicle to park into a target parking space during memory parking."

S502: When obtaining an input from the user to activate memory parking, the processing unit sends an instruction 1 to the perception system, where the instruction 1 indicates the perception system to collect environmental data around the target parking space.

S503: The processing unit sends an instruction 2 to the planning and control module, where the instruction 2 indicates the planning and control module to memorize a parking trajectory of the vehicle driven by the user to park into the target parking space.

The parking trajectory may include a plurality of trajectory points (for example, the trajectory points 1 to 8 shown in FIG. 3, and each trajectory point may correspond to one pose).

The instruction 2 indicates the planning and control module to memorize the parking trajectory of the vehicle may also be understood as that the instruction 2 indicates the planning and control module to memorize pose information of the vehicle during a process in which the user drives the vehicle to park into the target parking space.

S504: The perception system sends the environmental data collected by a sensor to the processing unit.

S505: When the vehicle is parked into the target parking space, the planning and control module saves the parking trajectory of the vehicle driven by the user to park into the target parking space, and sends an instruction 3 to the processing unit, where the instruction 3 indicates that the planning and control module has successfully memorized the parking trajectory of the vehicle driven by the user to park into the target parking space.

For example, when the processing unit receives the instruction 3, the processing unit may control the display to display prompt information "The parking trajectory for your vehicle to park into the target parking space has been memorized, and automatic parking will be available next time you approach the target parking space."

S506: The processing unit constructs environment information around the target parking space based on the data sent by the perception system.

That the processing unit constructs the environment information around the target parking space may also be understood as that the processing unit constructs map information (a local map) around the target parking space.

S501 to S506 may be understood as a process of parking the vehicle into the target parking space for the first time. In this process, the user may drive the vehicle to park into the target parking space, and the vehicle may memorize the parking trajectory during the process in which the user drives the vehicle to park into the target parking space, and construct the environment information around the target parking space.

S507: When the environment information around the vehicle matches the environment information constructed by the vehicle in S506, the processing unit controls the prompt apparatus to prompt the user to activate automatic parking.

For an implementation process of determining that the environment information around the vehicle matches the environment information constructed by the vehicle in S506, refer to the description in the foregoing embodiment. Details are not described herein again.

S507 is described using an example in which the processing unit controls the prompt apparatus to prompt the user to activate automatic parking. This embodiment of this application is not limited thereto. For example, the processing unit may alternatively prompt the user to activate driver-assisted parking. When obtaining that the user confirms activation of driver-assisted parking, the processing unit may control the display to display information about the parking trajectory memorized in S505. In this way, the user can control vehicle driving based on the information about the memorized parking trajectory.

For example, a user A with proficient driving skills may drive the vehicle to park into the target parking space. The vehicle memorizes the parking trajectory during a process in which the user A drives the vehicle to park into the target parking space. When a user B with limited driving skills drives the vehicle near the target parking space, the vehicle may display the previously memorized parking trajectory on the display. In this way, the user B can also smoothly park the vehicle into the target parking space according to the previously memorized parking trajectory.

S508: When obtaining an input from the user to activate memory parking, the processing unit sends an instruction 4 to the planning and control module, where the instruction 4 indicates to control the vehicle to park into the target parking space.

S509: The planning and control module controls the vehicle based on the instruction 4 and the parking trajectory memorized in S505 to park into the target parking space.

The foregoing S507 to S509 are a process of parking the vehicle into the target parking space again.

A parking trajectory (pose information) of a vehicle during a process in which a user drives the vehicle to park into a target parking space is memorized, so that when the user wants to park the vehicle into the target parking space next time, the vehicle can be automatically controlled through an automatic parking function and based on the previously memorized pose information to park into the target parking space. For some special parking spaces, the vehicle proactively memorizes the pose information when the user drives the vehicle to park into the target parking space, so that capability boundaries of automatic parking can be extended, parking efficiency can be improved, and a range of parking scenarios can be expanded. In addition, a process in which the user needs to manually park each time the user encounters a special parking space is avoided, thereby helping to improve parking experience of the user and also helping to improve intelligence of the vehicle.

The planning and control module and the processing unit may be two independent units, or the planning and control module may be located during the processing unit. This is not specifically limited in this embodiment of this application.

In the foregoing method 500, when the processing unit fails to identify a parking space based on data collected by the perception system, or the processing unit can identify a parking space based on data collected by the perception system and the planning module fails to control the vehicle to park into the target parking space, the vehicle controls the prompt apparatus to prompt the user whether to memorize the parking trajectory of the vehicle driven by the user to park into the target parking space needs. This embodiment of this application is not limited thereto.

For example, the vehicle may not indicate that the vehicle is to memorize the parking trajectory of the vehicle driven by the user to park into the target parking space. This process may be silent to the user, or the user may be unaware of this process. In this way, complex operations of the user can be further reduced. When the user drives the vehicle near the target parking space next time, the vehicle may be controlled to park into the target parking space using the environment around the target parking space and the proactively memorized parking trajectory of the vehicle driven by the user to park into the target parking space.

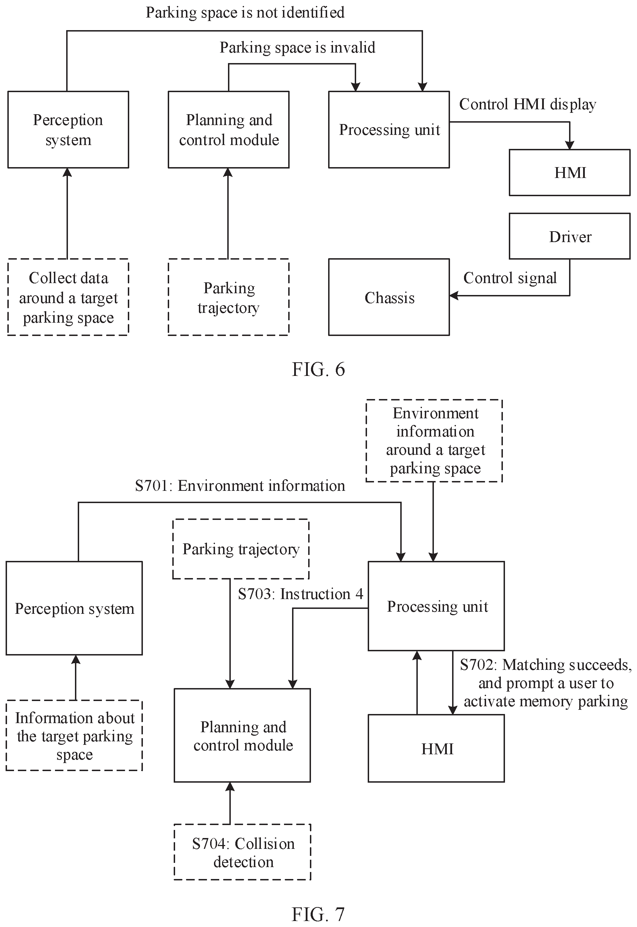

FIG. 6 is a diagram of an interaction method when a vehicle parks into a target parking space for the first time according to an embodiment of this application.

When a processing unit fails to identify a target parking space based on data collected by a perception system, or the processing unit can identify a target parking space based on data collected by the perception system and a planning module fails to control a vehicle to park into the target parking space, the processing unit may control a human-machine interface (human-machine interface, HMI) to indicate a user to drive the vehicle to park into the target parking space. During a process in which the user drives the vehicle to park into the target parking space, the perception system may collect data and send the collected data to the processing unit, so that the processing unit constructs first environment information around the target parking space based on the data. In addition, a planning and control module may memorize a parking trajectory (or pose information of the vehicle) during the process in which the user drives the vehicle to park into the target parking space.

FIG. 7 is a diagram of an interaction method 700 when the vehicle travels to a vicinity of the target parking space again according to an embodiment of this application. The interaction method 700 includes the following steps.

S701: The perception system sends the collected data to the processing unit.

S702: When second environment information matches the first environment information, the processing unit controls the HMI to inform the user that environmental matching succeeds and prompt the user to activate memory parking, where the second environment information is determined by the processing unit based on the data sent by the perception system.

In an embodiment, if the processing unit determines, based on the data collected by the perception system, that an object (for example, another vehicle) is already present in the target parking space, the processing unit may control a prompt apparatus to inform the user that another vehicle is already present in the target parking space and suggest that the user find a new parking space.

For example, the processing unit may determine, based on the data collected by the perception system and the previously constructed first environment information, whether the vehicle is around the target parking space.

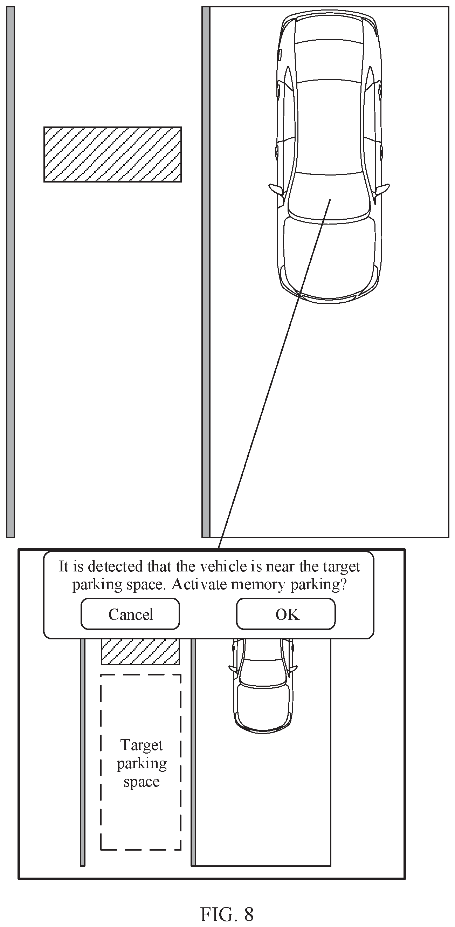

For example, FIG. 8 is a diagram of an HMI according to an embodiment of this application. When it is detected that the vehicle is near the target parking space, the vehicle may display prompt information "It is detected that the vehicle is near the target parking space. Activate memory parking?" via a display.

S703: The processing unit sends an instruction 4 to the planning and control module when detecting an input of the user tapping on the HMI to confirm activation of memory parking.

S704: The planning and control module may control the vehicle based on the instruction 4 and the memorized parking trajectory to park into the target parking space.

In an embodiment, when controlling the vehicle based on the previously memorized parking trajectory to park into the target parking space, the planning and control module may further determine, in real time, data collected by the perception system, and determine a risk of collision between the vehicle and an obstacle (for example, a pedestrian) in a parking process of the vehicle. If determining that there is a high risk of collision between the vehicle and the obstacle, the planning and control module may control the vehicle to brake. When there is no risk of collision between the vehicle and the obstacle or a risk of collision is low, the vehicle may continue to be controlled based on the previously memorized parking trajectory to park into the target parking space.

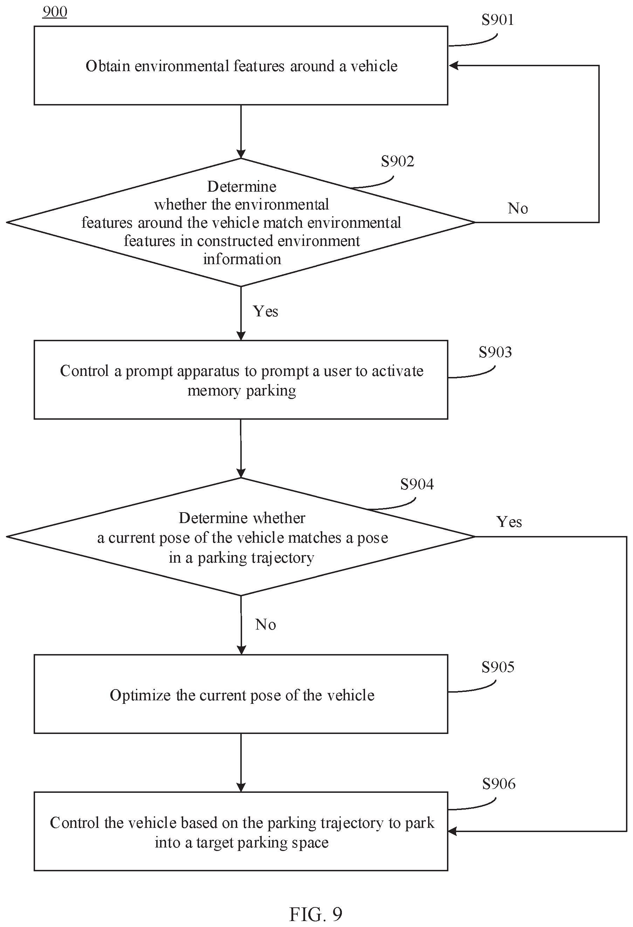

FIG. 9 is a schematic flowchart of a parking method 900 according to an embodiment of this application. The method 900 may be an implementation in which a vehicle is controlled based on previously constructed first environment information and a memorized parking trajectory to park into a target parking space. The method 900 includes the following steps.

S901: Obtain environmental features around the vehicle.

S902: Determine whether the environmental features around the vehicle match environmental features in the first environment information constructed by the vehicle.

If the environmental features around the vehicle match the environmental features in the first environment information constructed by the vehicle, S903 is performed. If the environmental features around the vehicle do not match the environmental features in the first environment information constructed by the vehicle, S901 continues to be performed.

S903: Control a prompt apparatus to prompt a user to activate memory parking.

S904: When an input from the user to activate memory parking is obtained, determine whether a current vehicle pose matches a pose in the parking trajectory.

If the current vehicle pose matches a pose in the parking trajectory, S906 is performed. If the current vehicle pose does not match any one of the poses in the parking trajectory, S905 is performed.

S905: Optimize the current vehicle pose.

In an embodiment, before optimizing the current vehicle pose, the method 900 further includes: obtaining the current vehicle pose. For example, the vehicle may determine, as the current pose, the pose when the input from the user to activate memory parking is obtained.

In an embodiment, when the current pose does not match any one of the poses in the parking trajectory, the method 900 further includes: controlling the prompt apparatus to prompt the user to adjust the vehicle pose to a pose in the parking pose.

In an embodiment, the parking trajectory includes poses 1 to N, where N is an integer greater than 1, the pose 1 is an initial pose, and the pose N is a vehicle pose after parking into the target parking space. Controlling the prompt apparatus to prompt the user to adjust the vehicle to a pose in the parking pose includes: controlling a display apparatus to display a plurality of poses in the parking trajectory, and prompting the user to adjust the vehicle pose to any one of the plurality of poses (for example, the pose 1).

For example, optimizing the current vehicle pose includes: controlling the vehicle to change from the current pose to the pose 1. In this way, after the vehicle pose is adjusted to the pose 1, the vehicle may be controlled to park into the target parking space based on the pose 1 to N.

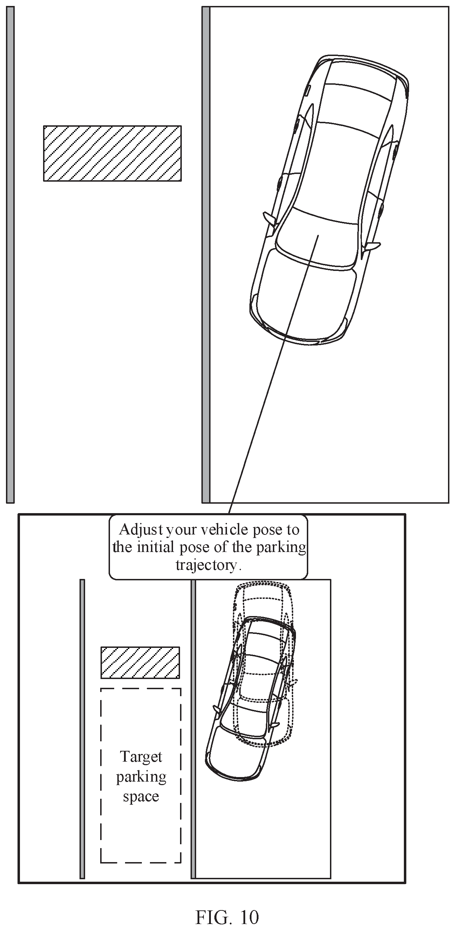

For example, FIG. 10 shows another HMI according to an embodiment of this application.

As shown in FIG. 10, the vehicle detects that a current position is around the target parking space and obtains an instruction from the user to activate automatic parking. When determining that the current vehicle pose does not match the pose 1 (a pose corresponding to a trajectory point 1) in the memorized parking trajectory (including the trajectory point 1 to a trajectory point 8), the vehicle may control the HMI to display prompt information "Adjust your vehicle pose to the initial pose of the parking trajectory." When it is detected that the user controls the vehicle to change to the initial pose (for example, the pose 1, as shown by a dashed line in FIG. 10), the vehicle may control the prompt apparatus to prompt the user to release the steering wheel and indicate that the vehicle has activated memory parking.

The foregoing is described using an example in which the vehicle prompts the user to adjust the vehicle to the pose 1. This embodiment of this application is not limited thereto. For example, when determining that the current pose does not match the pose 1, the vehicle may first automatically control the vehicle to change from the current pose to the pose 1, and then control the vehicle based on the parking trajectory to park into the target parking space.

That the current vehicle pose does not match the pose 1 may be understood as that a distance between a position indicated by the current pose and a position indicated by the pose 1 is greater than or equal to a preset distance (for example, 1 meter), or may be understood as that an orientation indicated by the current pose differs greatly from a pose indicated by the pose 1. For example, a yaw angle indicated by the current pose and a yaw angle indicated by the pose 1 are greater than or equal to a preset angle.

For example, the parking trajectory includes poses 1 to N, and optimizing the current vehicle pose includes: controlling the vehicle to change from the current pose to a pose n, where a distance between a position indicated by the pose n and the position indicated by the current pose is less than or equal to the preset distance, n is a positive integer, and n is greater than or equal to 1 and less than N.

For example, the parking trajectory includes trajectory points 1 to N, and the trajectory points 1 to N correspond to the poses 1 to N. The poses 1 to N respectively indicate positions 1 to N, and a position n indicated by the pose n is a position of the positions 1 to N that is closest to the position indicated by the current pose.

S906: Control the vehicle based on the parking trajectory to park into the target parking space.

For example, if the vehicle pose is optimized from the current pose to the pose n, the vehicle may be controlled based on the poses n to N to park into the target parking space.

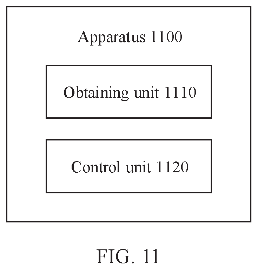

FIG. 11 is a block diagram of a parking apparatus 1100 according to an embodiment of this application. The apparatus 1100 includes: an obtaining unit 1110, configured to obtain first pose information, where the first pose information includes pose information of a vehicle during a process in which a user drives the vehicle to park into a first target parking space; and a control unit 1120, configured to control the vehicle based on the first pose information to automatically park into the first target parking space.

Optionally, the first pose information includes information about a plurality of poses, and the control unit 1120 is configured to: when a first vehicle pose does not match any one of the plurality of poses, control the vehicle to change from the first pose to a second pose, where the plurality of poses include the second pose; and control the vehicle based on a pose starting from the second pose of the plurality of poses to automatically park into the first target parking space.

Optionally, the plurality of poses indicate a plurality of positions, and the position indicated by the second pose is a position of the plurality of positions that is closest to the position indicated by the first pose.

Optionally, the obtaining unit 1110 is further configured to obtain first environment information around the first target parking space; and the control unit 1120 is further configured to: when second environment information around the vehicle matches the first environment information, control a prompt apparatus to prompt the user to activate automatic parking, and when a first input of the user is obtained, control the vehicle based on the first pose information to automatically park into the first target parking space, where the first input indicates to activate automatic parking.

Optionally, the obtaining unit 1110 is configured to: when a speed of the vehicle is less than or equal to a preset speed, obtain data collected by a sensor outside a cockpit; and construct the first environment information based on a position of the first target parking space and the data.

Optionally, the obtaining unit 1110 is configured to obtain the first pose information when the vehicle fails to identify the first target parking space or the vehicle fails to plan a parking trajectory from a current position of the vehicle to the first target parking space.

Optionally, the first target parking space includes a curbside parking space.

For example, the obtaining unit 1110 may be the computing platform in FIG. 1, or a processing circuit, a processor, or a controller on the computing platform. For example, the obtaining unit 1110 is a processor 121 on the computing platform. The processor 121 may obtain the pose information during the process in which the user drives the vehicle to park into the target parking space.

For another example, the control unit 1120 may be the computing platform in FIG. 1, or a processing circuit, a processor, or a controller on the computing platform. For example, the control unit 1120 is a processor 122 on the computing platform. The processor 122 may control the vehicle based on the pose information obtained by the processor 121 to automatically park into the target parking space.

The function implemented by the obtaining unit 1110 and the function implemented by the control unit 1120 may be implemented by different processors, or may be implemented by a same processor. This is not limited in this embodiment of this application.

It should be understood that division of the units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration file to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides a parking apparatus. The apparatus includes a processing unit and a storage unit. The storage unit is configured to store instructions. The processing unit executes the instructions stored in the storage unit, to enable the apparatus to perform the method or the steps performed in the foregoing embodiment.

Optionally, if the apparatus is located in a vehicle, the processing unit may be the processors 121 to 12n shown in FIG. 1.

An embodiment of this application further provides a parking system. The parking system may include a computing platform and a prompt apparatus. The computing platform may include the foregoing apparatus 1100.

An embodiment of this application further provides a vehicle. The vehicle may include the parking apparatus 1100 or the parking system.

An embodiment of this application further provides a computer program product. The computer program product includes computer program code. When the computer program code is run on a computer, the computer is enabled to perform the methods in the foregoing embodiments.

An embodiment of this application further provides a computer-readable medium. The computer-readable medium stores program code. When the computer program code is run on a computer, the computer is enabled to perform the methods in the foregoing embodiments.

An embodiment of this application further provides a chip. The chip includes a circuit, and the circuit is configured to perform the methods in the foregoing embodiments.

In an implementation process, steps in the foregoing methods can be implemented by using a hardware integrated logic circuit during the processor, or by using instructions in a form of software. The method of the communication disclosed with reference to embodiments of this application may be directly performed by a hardware processor, or may be performed by using a combination of hardware during the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A parking method, comprising:
obtaining first pose information, wherein the first pose information comprises pose information of a vehicle during a process in which a user drives the vehicle to park into the first target parking space; and
controlling the vehicle based on the first pose information to automatically park into the first target parking space.

2. The method according to claim 1, wherein the first pose information comprises information about a plurality of poses, and controlling the vehicle based on the first pose information to automatically park into the first target parking space comprises:
when a first vehicle pose does not match any one of the plurality of poses, controlling the vehicle to change from the first pose to a second pose, wherein the plurality of poses comprise the second pose; and
controlling the vehicle based on a pose starting from the second pose of the plurality of poses to automatically park into the first target parking space.

3. The method according to claim 2, wherein the plurality of poses indicate a plurality of positions, and a position indicated by the second pose is a position of the plurality of positions that is closest to a position indicated by the first pose.

4. The method according to any one of claims 1 to 3, wherein the method further comprises:
obtaining first environment information around the first target parking space; and
when it is detected that second environment information around the vehicle matches the first environment information, controlling a prompt apparatus to prompt the user to activate automatic parking; and
controlling the vehicle based on the first pose information to automatically park into the first target parking space comprises:
when a first input of the user is obtained, controlling the vehicle based on the first pose information to automatically park into the first target parking space, wherein the first input indicates to activate automatic parking.

5. The method according to claim 4, wherein obtaining the first environment information around the first target parking space comprises:
when it is detected that a speed of the vehicle is less than or equal to a preset speed, obtaining data collected by a perception system; and
constructing the first environment information based on a position of the first target parking space and the data.

6. The method according to any one of claims 1 to 5, wherein obtaining the first pose information comprises:
obtaining the first pose information when the vehicle fails to identify the first target parking space or the vehicle fails to plan a parking trajectory from a current position of the vehicle to the first target parking space.

7. The method according to claim 6, wherein the first target parking space comprises a curbside parking space.

8. A parking apparatus, comprising:
an obtaining unit, configured to obtain first pose information, wherein the first pose information comprises pose information of a vehicle during a process in which a user drives the vehicle to park into a first target parking space; and
a control unit, configured to control the vehicle based on the first pose information to automatically park into the first target parking space.

9. The apparatus according to claim 8, wherein the first pose information comprises information about a plurality of poses, and the control unit is configured to:
when a first vehicle pose does not match any one of the plurality of poses, control the vehicle to change from the first pose to a second pose, wherein the plurality of poses comprise the second pose; and
control the vehicle based on a pose starting from the second pose of the plurality of poses to automatically park into the first target parking space.

10. The apparatus according to claim 9, wherein the plurality of poses indicate a plurality of positions, and the position indicated by the second pose is a position of the plurality of positions that is closest to the position indicated by the first pose.

11. The apparatus according to any one of claims 8 to 10, wherein
the obtaining unit is further configured to obtain first environment information around the first target parking space; and
the control unit is further configured to: when second environment information around the vehicle matches the first environment information, control a prompt apparatus to prompt the user to activate automatic parking, and
when a first input of the user is obtained, control the vehicle based on the first pose information to automatically park into the first target parking space, wherein the first input indicates to activate automatic parking.

12. The apparatus according to claim 11, wherein the obtaining unit is configured to:
when it is detected that a speed of the vehicle is less than or equal to a preset speed, obtain data collected by a sensor outside a cockpit; and
construct the first environment information based on a position of the first target parking space and the data.

13. The apparatus according to any one of claims 8 to 12, wherein the obtaining unit is configured to:
obtain the first pose information when the vehicle fails to identify the first target parking space or the vehicle fails to plan a parking trajectory from a current position of the vehicle to the first target parking space.

14. The apparatus according to claim 13, wherein the first target parking space comprises a curbside parking space.

15. A parking apparatus, comprising:
a memory, configured to store a computer program; and
a processor, configured to execute the computer program stored in the memory, to enable the apparatus to perform the method according to any one of claims 1 to 7.

16. A parking system, wherein the control system comprises a perception system and a computing platform, and the computing platform comprises the method according to any one of claims 1 to 7.

17. A vehicle, comprising the parking apparatus according to any one of claims 8 to 15, or comprising the parking system according to claim 16.

18. A computer-readable storage medium, wherein the computer-readable storage medium stores a computer program, and when the computer program is executed by a computer, the method according to any one of claims 1 to 7 is implemented.

19. A chip, comprising a circuit, wherein the circuit is configured to perform the method according to any one of claims 1 to 7.
